# EUROPEAN PATENT APPLICATION

(11) **EP 3 061 369 A1**
(43) Date of publication of application: **31.08.2016**
(21) Application number: 14855862.0
(22) Date of filing: 22.10.2014
(51) Int. Cl.: A47J 31/18, A47J 31/24, A47J 31/44

(54) **SMALL-SIZE MANUAL PRESSURIZED COFFEEMAKER**

(30) Priority: 23.10.2013 CN 201310501985
(71) Applicant: Shenzhen Staresso Culture Co., Ltd., Shenzhen Guangdong (CN)
(72) Inventor: ZHAO, Kai, Longjiang Town, Shunde District (CN)
(74) Representative: Becker Kurig Straus
(86) International application number: PCT/CN2014/089158
(87) International publication number: WO 2015/058690

(57) **Abstract**

The present patent application relates to a small-sized hand-operated pressure coffeepot, which mainly comprises a filter bowl, a piston-type pressure pump contained in the filter bowl and a coffee box component. A cavity of the filter bowl is partitioned, by a middle partition piece, into an upper space for containing hot water and a lower space for containing the coffee box component. The hand-operated piston-type pressure pump is arranged in the upper space; coffee powder is placed in a coffee powder box; the coffee powder box is compacted in the lower space of the filter bowl through a sleeve; and the filter bowl is arranged at the upper end of a pot body. During making coffee, the coffee powder or a coffee capsule is first placed in the coffee powder box and is compacted at the bottom end of the filter bowl; then the filter bowl is mounted on the pot body; boiling water is poured into the filter bowl; a pot lid is placed, and the piston is pressed so that the boiling water is pressed into the coffee powder box at the lower part of the filter bowl. In this way, concentrated coffee can be made after filtration. The small-sized hand-operated pressure coffeepot of the present patent application can generate high pressure. The coffeepot is good in effect, simple in structure, low in cost, small in size, light in weight and convenient to carry and easy to use.

## Description

### FIELD OF THE PATENT APPLICATION

This application relates to a small-sized hand-operated pressure coffeepot, which can make concentrated coffee by means of simple manual operation, and pertains to the field of daily kitchen utensils.

### BACKGROUND

With continuous improvement of people's living standards, coffee has been highly integrated into people's lives. At present, there are many utensils for making coffee, where a water pump pressure coffeepot makes coffee having the highest concentration, the best effect, but with high manufacturing cost, complex structure and relatively large size.

### SUMMARY

In order to conveniently make high-concentration coffee beverage, this application proposes a bran-new technical solution. A small-sized hand-operated pressure coffeepot may produce large pressure by simple manual operation to make high-concentration coffee having rich foams and achieve a good effect of a water pump high pressure coffeemaker. The coffeepot may be suitable to use a coffee capsule or directly use coffee powder. And the coffeepot is wide in range of use, convenient for use, easy to clean, safe and reliable, sanitary and environment-friendly, small and exquisite in shape, convenient for carrying, simple and compact in structure, and low in cost.

A small-sized hand-operated pressure coffeepot includes: a pot body, a filter bowl supported on the pot body, a piston-type pressure pump contained in the filter bowl and a coffee box component, where the filter bowl is detachably connected with the pot body, and a cavity of the filter bowl is partitioned, by a middle partition piece, into an upper space for containing hot water and a lower space for containing the coffee box component; the piston-type pressure pump is arranged in the upper space of the filter bowl; a lower end of the piston-type pressure pump penetrates through a through hole at the center of the middle partition piece, and a lower end of a pump body is provided with a one-way water inlet valve communicated with the upper space of the filter bowl and a one-way water outlet valve communicated with the lower space of the filter bowl; the coffee box component includes a coffee powder box and a sleeve sleeved on a periphery of the coffee powder box, the sleeve is in threaded connection with the filter bowl, and the bottom of the coffee powder box is provided with a water outlet hole.

The small-sized hand-operated pressure coffeepot of this application may produce large pressure by simple manual operation to make high-concentration coffee having rich foams and achieve a good effect of a water pump high pressure coffeemaker. The coffeepot may be suitable to use a coffee capsule or directly use coffee powder. And the coffeepot is wide in range of use, convenient for use, easy to clean, safe and reliable, sanitary and environment-friendly, small and exquisite in shape, convenient for carrying, simple and compact in structure, and low in cost.

### BRIEF DESCRIPTION OF THE DRAWINGS

FIG. 1 is a longitudinal section structure diagram of a small-sized hand-operated pressure coffeepot according to an embodiment of this application;
FIG. 2 is a component diagram of a small-sized hand-operated pressure coffeepot according to an embodiment of this application;
FIG. 3 is an outside drawing of a small-sized hand-operated pressure coffeepot according to an embodiment of this application;
FIG. 4 is an exploded drawing of a part of a small-sized hand-operated pressure coffeepot according to an embodiment of this application; and
FIG. 5 is a longitudinal section structure diagram of a small-sized hand-operated pressure coffeepot according to another embodiment of this application.

Reference numerals: 100 coffeepot, 10 pot body, 11 bottom cover, 20 filter bowl, 21 middle partition piece, 211 sealing ring, 212 barrier screen, 31 pot lid, 32 pump body, 33 pump cover, 34 piston rod, 35 pump plug, 36 piston, 37 spring, 38 seal rin g, 311 outer cylinder, 312 internal cylinder, 321 flange member, 341 handgrip, 351 first ball, 352 choke plug, 353 second ball, 354 elastic retainer ring, 361 piston seal ring, 40 coffee powder box, 41 filter screen, 50 sleeve, 51 water outlet cover, 60 conical pricking pin, 70 coffee capsule, 80 coffee cup.

### DETAILED DESCRIPTION

Detailed description of this application will further be made with reference to drawings and embodiments in order to make the objects, technical solutions and advantages of this application more apparent. It is to be understood that the embodiments described herein are only intended to explain this application, and are not restrictive of this application.

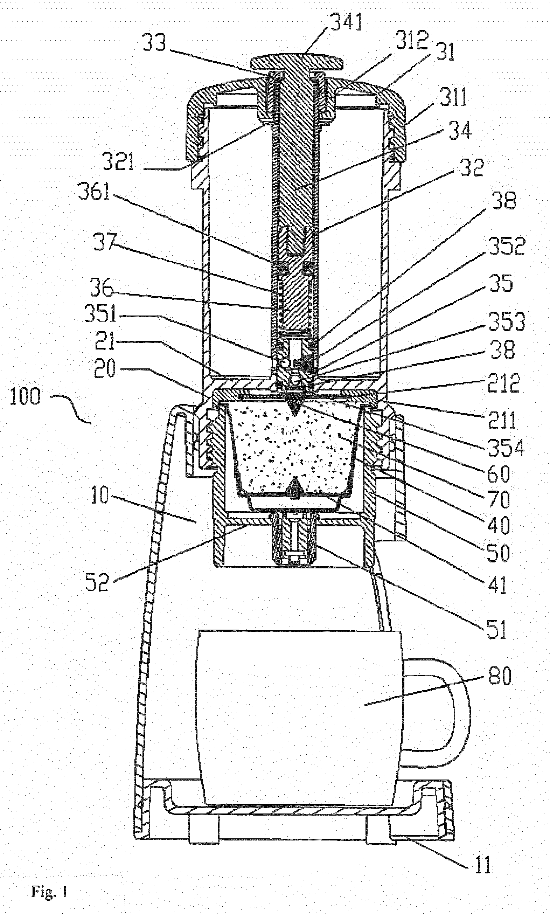

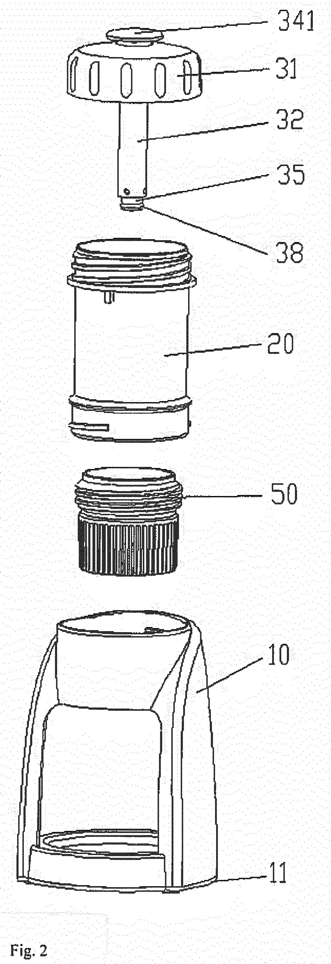

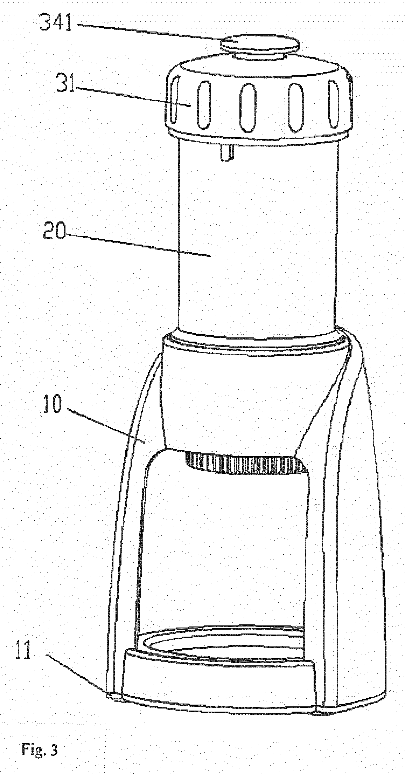

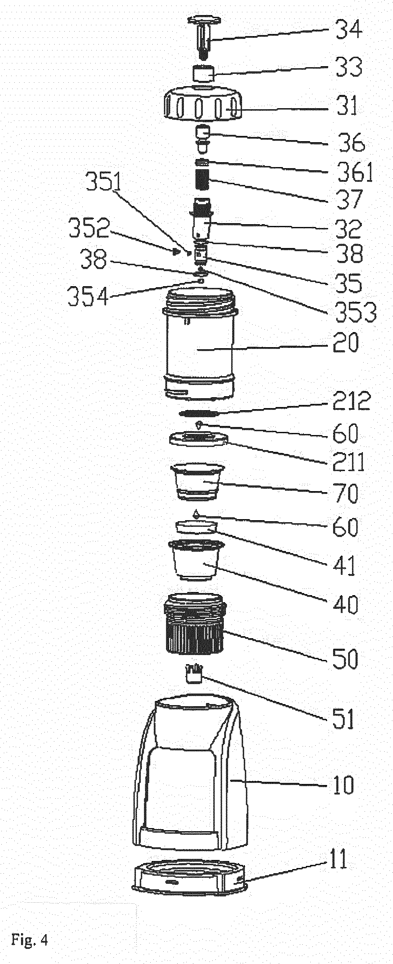

As shown in FIG. 1 to FIG. 4, this application provides a small-sized hand-operated pressure coffeepot 100 having upper and lower structures, mainly including: a pot body 10, a filter bowl 20 supported on the pot body 10, a piston-type pressure pump contained in the filter bowl 20 and a coffee box component.

The bottom of the pot body 10 is provided with a bottom cover 11 for placing a coffee cup 80. The upper part of the pot body 10 is provided with a supporting structure for supporting and fixing the filter bowl 20 above the bottom cover 11. Between the bottom cover 11 and the filter bowl 20 there is provided with open space for picking and placing the coffee cup 80. It is apparent to directly place the filter bowl 20 above the coffee cup 80.

The filter bowl 20 is detachably connected with the pot body 10, and a cavity of the filter bowl 20 is partitioned, by a middle partition piece 21, into an upper space for containing hot water and a lower space for containing the coffee box component. A piston-type pressure pump is arranged in the upper space, and a center of the middle partition piece 21 has a through hole. Coffee powder may be placed into the coffee box component.

The piston-type pressure pump includes a pot lid 31, a pump body 32, a pump cover 33 and a piston rod 34 penetrating through the pump body 32. The pot lid 31 includes an outer cylinder 311 positioned at an edge of the pot lid 31 and an internal cylinder 312 positioned at a center of the pot lid. An inner circumferential wall of the outer cylinder 311 is in threaded connection with an outer circumferential wall of the filter bowl 20. Of course, the inner circumferential wall of the outer cylinder 311 also may be connected with the outer circumferential wall of the filter bowl 20 by other means. An upper end of the pump body 32 penetrates through the internal cylinder 312 of the pot lid, the pump cover 33 is fixedly mounted at an upper part of the pump body 32, and the pump cover 33 is received in the internal cylinder 312 of the pot lid 31 and abuts on an upper end surface at the bottom of the internal cylinder 312. The pump body 32 is provided with a flange member 321 that abuts on a lower end surface of the internal cylinder 312 of the pot lid, and the pot lid 31 is sandwiched between the flange member 321 of the pump body 32 and the pump cover 33 so that the pot lid 31 and the pump body 32 are connected into an axially-fixed and rotatable component. The lower end of the pump body 32 penetrates through a through hole at the center of the middle partition piece 21, and the lower end of the pump body 32 is provided with a one-way water inlet valve communicated with the upper space of the filter bowl 20 and allowing water to flow from the upper space of the filter bowl 20 into the pump body 32 and a one-way water outlet valve communicated with the lower space of the filter bowl and allowing water to flow from the inner cavity of the pump body 32 to the lower space of the filter bowl 20.

In the embodiment as shown in FIG. 1, the lower part of the pump body 32 is provided with a pump plug 35, between the pump plug 35 and the pump body 32 there is provided with a sealing ring 38. The piston rod 34 is limited in the pump body 32 by the pump cover. The lower end of the piston rod 34 is connected with a piston 36. Between the piston 36 and the pump plug 35 there is provided with a spring 37. Apparently, the spring 37 merely provides a reset function of the piston 36. Also the spring 37 may be not provided, instead, the piston 36 is manually lifted to reset. The sealing ring 38 is sleeved on an upper ring groove of the pump plug 35 so that the pump plug 35 hermetically fits to an internal circle of the pump body 32. The pump body 32 and the pump plug 35 are connected into a whole.

The piston 36 is sleeved with a piston sealing ring 361 so that the piston 36 slidably and hermetically fits to the inner wall of the pump body 32. The lower end of the piston rod 34 is in threaded connection with the piston 36. The spring 37 abuts between the piston 36 and two end faces at the bottom of the pump body 32 to upward reset the piston 34.

The pump plug 35 penetrates through a through hole of the middle partition piece 21. The through hole of the middle partition piece 21 is plugged by the pump plug 35 and thus is not marked. And the sealing ring 38 is compressed between an outer periphery of the pump plug 35 and an internal wall of the through hole, and the sealing ring 38 is sleeved on a circular groove at a lower end of the pump plug 35. The pump plug 35 includes an axial through hole and a side face disposed at a lower part of the pump plug 35 is provided with a transverse through hole, the axial through hole is respectively communicated with an inside of the pump body 32 and the lower space of the filter bowl, the transverse through hole is communicated with the upper space of the filter bowl 20, a hole mouth at one end of the transverse through hole is a first conical hole mouth whose larger end is toward an inside of the pump plug 35, the first conical hole mouth is internally provided with a first ball 351, the first conical hole mouth and the first ball 351 form the one-way water inlet valve, and a hole mouth at the other end of the transverse through hole is provided with a choke plug 352 preventing the first ball 351 from shifting. The choke plug 352 is plugged at the hole mouth of the transverse through hole, which can prevent the first ball 351 from shifting and falling off and can seal up, convenient for processing and assembling. A hole mouth at the lower end of the axial through hole is a second conical hole mouth whose larger end is downward, the second conical hole mouth is internally provided with a second ball 353, the second conical hole mouth and the second ball 353 form the one-way water outlet valve, and an outlet at the lower end of the axial through hole is further provided with an elastic retainer ring 354 for preventing the second ball 353 from breaking away.

The coffee box component comprises a coffee powder box 40 and a sleeve 50 sleeved on a periphery of the coffee powder box 40. The sleeve 50 is in threaded connection with the inner circumferential wall of the filter bowl 20. The bottom of the coffee powder box 40 is provided with a water outlet hole having a diameter of about 0.6mm, and the center of the bottom of the sleeve 50 is provided the water outlet cover 51. Apparently, the sleeve 50 also may be detachably connected with the filter bowl 20 by a buckle or by other means. As shown in FIG. 1, a lower end face of the middle partition piece 21 is provided with a disk-type sealing ring 211, and a central part of the sealing ring 211 is provided with a barrier screen 212 on the surface thereof a plurality of small holes are uniformly distributed. The barrier screen 212 is used for enabling water in the upper space of the filter bowl 20 to uniformly flow into the coffee powder box. The upper end surface of the sleeve 50 abuts on a flange at an upper mouth of the coffee powder box 40, and the flange at the upper mouth of the coffee powder box 40 comes into close contact with the sealing ring 211 disposed on the lower end face of the middle partition piece 21 by means of squeezing of the sleeve 50. In this way, it is implemented the tight coupling between the coffee powder box 40 and the filter bowl. The bottom of the coffee powder box 40 has an annular step, on which there is provided with a filter screen 41 on the surface thereof a plurality of small holes are uniformly distributed. A center of the filter screen 41 is riveted with a pricking pin 60 whose tip is upward, and a center of the barrier screen 212 of the sealing ring 211 is riveted with a pricking pin 60 whose tip is downward. The conical pricking pin 60, whose tip is downward, riveted at the center of the barrier screen 212 may puncture the upper surface of the coffee capsule 70. The conical pricking pin 60, whose tip is upward, riveted at the center of the filter screen 41 may puncture the lower surface of the coffee capsule 70, so that water may flow, through the punctured holes, into the coffee capsule 70. In this way, not only the coffee capsule 70 can be used to make coffee, but also ordinary coffee powder can be used to make coffee, that is, it can be used more widely.

In this application, the filter bowl 20 is partitioned, by the middle partition piece 21, into two parts: the upper space and the lower space which is specially provided with the coffee powder box 40. When coffee is filled, both the sleeve 50 and the coffee powder box 40 are screwed out of the lower end of the filter bowl 20 together, then the coffee powder or the coffee capsule 70 may be filled into the coffee powder box 40, which is more convenient. After the coffee powder or the coffee capsule 70 is filled, both the sleeve 50 and the coffee powder box 40 are screwed into the lower end of the filter bowl 20 together, and the coffee powder box 40 is tightly pressed by the sleeve 50 on the sealing ring 211 at the lower end of the middle partition piece 21. In this way, sealing of the coffee powder box 40 and the filter bowl 20 is implemented. In the coffee powder box 40, high pressure water injected by the piston-type pressure pump is mixed with the coffee powder or the coffee capsule 70. Because the water outlet hole of the coffee powder box 40 is smaller, the coffee powder box 40 has larger internal pressure so that water can be fully mixed with the coffee powder or the coffee capsule 70 to make high-concentration coffee. Finally, after being filtered by the filter screen 41, the coffee flows out of the water outlet hole of the coffee powder box 40.

During making coffee, the coffee powder or the coffee capsule 70 is first placed in the coffee powder box 40, then the coffee powder box 40 is placed on the sleeve 50, the sleeve 50 is tightly mounted at the bottom end of the filter bowl 20 so that the upper mouth part of the coffee powder box 40 and the disk-type sealing ring 211 of the middle partition piece 21 are compressed tightly. Then the filter bowl 20 is mounted on the pot body 10, boiling water is poured into the filter bowl 20, a pot lid 31 is placed, and the piston rod 34 is pressed repeatedly so that the boiling water is pressed into the coffee powder box 40 at the lower part of the filter bowl 20. In this way, concentrated coffee can be made after filtration.

As shown in FIG. 1, a center at a lower part of the sleeve 50 is provided with a drum-shaped circle, a center of the drum-shaped circle has a through hole coaxially disposed with respect to a water outlet hole at the bottom of the coffee powder box 40, a gap is provided between an end face where an upper open part of the through hole is and an end face where a lower open part of the water outlet hole is; a water outlet cover 51 is sleeved at the periphery of the drum-shaped circle, and the upper end at the periphery of the water outlet cover 51 is clamped in a corresponding buttonhole on a bottom plate 52 by a buckle, thereby preventing the water outlet cover 51 from breaking away. A central part at the bottom of the water outlet cover 51 blocks the through hole at the center of the drum-shaped circle, along a periphery at the bottom of the water outlet cover 51 there is provided with multiple holes, and a gap is provided between an end face at the bottom of the water outlet cover 51 and an end face at the bottom of the drum-shaped circle for ease of outflow of water. Because the coffee powder box 40 has larger internal pressure, coffee water flows very fast after flowing through the water outlet hole at the bottom of the coffee powder box 40. Due to physical effect of fluid, outside air flowing through the gap between the water outlet hole and the through hole is sucked in and is injected, together with the coffee water, into the bottom at the center of the water outlet cover 51, and then flows out of holes nearby the water outlet cover 51, to make the coffee produce rich foams.

The middle section of the piston rod 34 is a cross-shaped rib structure. The top of the piston rod 34 is provided with a handgrip 341. The pump cover 33 has a cross-shaped center hole. The cross-shaped rib structure of the piston rod 34 fits with the cross-shaped center hole of the pump cover 33. When the rib of the piston rod 34 is consistent with the "cross" of the center hole in angle, the piston rod 34 may freely slide axially with respect to the pump cover 33. When not in use, the piston rod 34 is pressed at the bottom, and the step at the neck of the piston rod 34 abuts on the inner end face of the pump cover 33 by slightly screwing, so that the piston rod 34 will not bounce off, which is convenient for collecting.

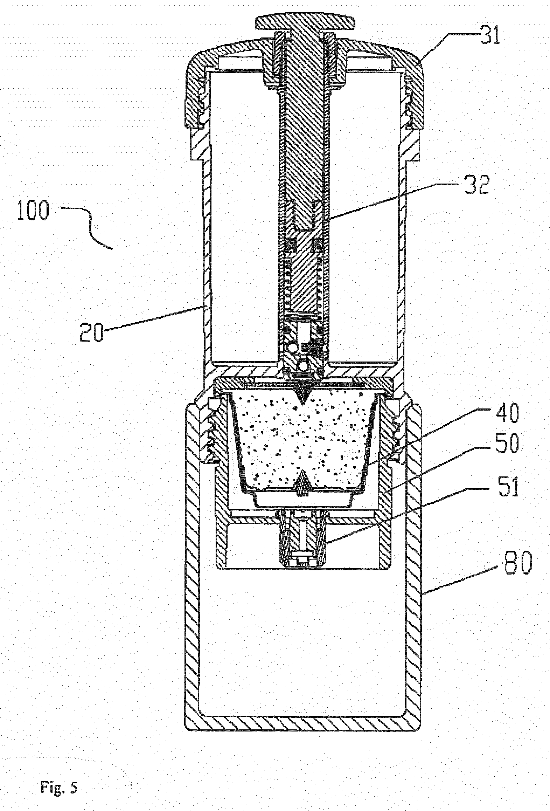

The pot body part of the coffeepot in this application also may be replaced by a coffee cup 80. The filter bowl 20 is directly placed above the coffee cup 80, as shown in FIG. 5, which may leave the pot body out, thereby further simplifying the structure.

The coffeepot produces very large pressure, which is amount to the pressure of an ordinary water pump high pressure coffeemaker. In general, the inside diameter of the pump body 32 is about 10mm. If a human hand pressure reaches 12 kilograms, it can be known from theoretical calculation that the pressure may reach 15 standard atmospheric pressures, which is basically equivalent to the maximum working pressure of the high pressure coffeemaker, and coffee made in this way is very high in quality.

The coffeepot is very safe although it produces very large pressure. This is because the pressure is controlled artificially, and the pressure is only centralized in very small space inside the coffee powder box. Therefore, it is safe and reliable.

The coffeepot is suitable to make 30∼100ml coffee once. The coffeepot is small in size, light in weight, not used of power source, and convenient for carrying. The coffeepot not only can be used indoors, but also can be used in travel or outdoors. Thus the coffeepot is widely used.

The pump body of the coffeepot is made of stainless steel. The filter bowl 20 is made of transparent and heat-resistant PC plastic, or glass or ceramic. The coffee powder box 40 and the filter screen 41 are made of stainless steel. The sealing ring is made of silicone rubber. The coffeepot is simple in structure, low in manufacturing cost and high in reliability.

The coffeepot is completely manually, and can only be made small-sized due to limitation of physical strength of human body to meet the requirements of a part of users who want to drink coffee but have no special high pressure coffeemaker for the moment.

Of course, this application may also have many other embodiments. Those skilled in the art may make various corresponding changes and transformations according to this application without departing from the spirit and essence of this application. And these corresponding changes and transformations shall fall within the scope of protection of the appended claims of this application.

## Claims

1. A small-sized hand-operated pressure coffeepot, comprising:
a pot body,
a filter bowl supported on the pot body,
a piston-type pressure pump contained in the filter bowl, and
a coffee box component,
wherein the filter bowl is detachably connected with the pot body, and a cavity of the filter bowl is partitioned, by a middle partition piece, into an upper space for containing hot water and a lower space for containing the coffee box component; the piston-type pressure pump is arranged in the upper space of the filter bowl; a lower end of the piston-type pressure pump penetrates through a through hole at a center of the middle partition piece, and a lower end of a pump body is provided with a one-way water inlet valve communicated with the upper space of the filter bowl and a one-way water outlet valve communicated with the lower space of the filter bowl; the coffee box component comprises a coffee powder box and a sleeve sleeved on a periphery of the coffee powder box; a bottom of the coffee powder box is provided with a water outlet hole; the piston-type pressure pump comprises a pot lid, a pump body, a pump cover and a piston rod penetrating through the pump body, the piston rod is limited into the pump body by the pump cover, and a lower end of the piston rod is connected with a piston.

2. The small-sized hand-operated pressure coffeepot according to claim 1, wherein the pot lid comprises an outer cylinder positioned at an edge of the pot lid and an internal cylinder positioned at a center of the pot lid, an inner circumferential wall of the outer cylinder is connected with an outer circumferential wall of the filter bowl, an upper end of the pump body penetrates through the internal cylinder of the pot lid, the pump cover is fixedly mounted at an upper part of the pump body, and the pump cover is received in the internal cylinder of the pot lid and abuts on an upper end surface at the bottom of the internal cylinder, the pump body is provided with a flange member that abuts on a lower end surface of the internal cylinder of the pot lid, and the pot lid is sandwiched between the pump body and the pump cover so that the pot lid and the pump body are connected into an axially-fixed and rotatable component.

3. The small-sized hand-operated pressure coffeepot according to claim 2, wherein a lower end of the pump body has a pump plug, a sealing ring is disposed between the pump plug and the pump body, the pump plug penetrates through the through hole of the middle partition piece, and a sealing ring is compressed between an outer periphery of the pump plug and an internal wall of the through hole, and the sealing ring is sleeved on a circular groove at a lower end of the pump plug.

4. The small-sized hand-operated pressure coffeepot according to claim 3, wherein the pump plug comprises an axial through hole and a transverse through hole which is provided at a lower part of the pump plug , the axial through hole is respectively communicated with an inside of the pump body and the lower space of the filter bowl, the transverse through hole is communicated with the upper space of the filter bowl, a hole mouth at one end of the transverse through hole is a first conical hole mouth whose larger end is toward an inside of the pump plug, the first conical hole mouth is internally provided with a first ball, the first conical hole mouth and the first ball form the one-way water inlet valve, a hole mouth at the other end of the transverse through hole is provided with a choke plug preventing the first ball from shifting; a hole mouth at the lower end of the axial through hole is a second conical hole mouth whose larger end is downward, the second conical hole mouth is internally provided with a second ball, the second conical hole mouth and the second ball form the one-way water outlet valve, and an outlet at the lower end of the axial through hole is further provided with an elastic retainer ring for preventing the second ball from breaking away.

5. The small-sized hand-operated pressure coffeepot according to claim 1, wherein a center at a lower part of the sleeve is provided with a drum-shaped circle, a center of the drum-shaped circle has a through hole coaxially disposed with respect to a water outlet hole at the bottom of the coffee powder box, a gap is provided between an end face where an upper open part of the through hole is and an end face where a lower open part of the water outlet hole is; a water outlet cover is sleeved at the periphery of the drum-shaped circle, a central part at the bottom of the water outlet cover blocks the through hole, along a periphery at the bottom of the water outlet cover there is provided with multiple holes, and a gap is provided between an end face at the bottom of the water outlet cover and an end face at the bottom of the drum-shaped circle.

6. The small-sized hand-operated pressure coffeepot according to claim 5, wherein a lower end face of the middle partition piece is provided with a disk-type sealing ring, and a central part of the sealing ring is provided with a barrier screen on the surface thereof a plurality of small holes are uniformly distributed; an upper end surface of the sleeve abuts on a flange at an upper mouth of the coffee powder box, and the flange of the upper mouth part of the coffee powder box comes into close contact with the sealing ring disposed on the lower end face of the middle partition piece.

7. The small-sized hand-operated pressure coffeepot according to claim 6, wherein the bottom of the coffee powder box is provided with a filter screen on the surface thereof a plurality of small holes are uniformly distributed, a center of the filter screen is riveted with a pricking pin whose tip is upward, and a center of the barrier screen of the sealing ring is riveted with a pricking pin whose tip is downward.

8. The small-sized hand-operated pressure coffeepot according to claim 7, wherein the pump body, the coffee powder box and the filter screen are made of stainless steel, and the filter bowl is made of transparent and heat-resistant PC plastic, ceramic or glass.
